# EUROPEAN PATENT APPLICATION

(11) **EP 4 303 863 A1**
(43) Date of publication of application: **10.01.2024**
(21) Application number: 22183919.4
(22) Date of filing: 08.07.2022
(51) Int. Cl.: G09G 5/00, G09G 5/14, G06F 3/14

(54) **CONTROLLER WORKING POSITION AND AIR TRAFFIC CONTROL SYSTEM**

(71) Applicant: Rohde & Schwarz GmbH & Co. KG, 81671 München (DE)
(72) Inventor: Lautenbacher, Markus, 82487 Oberammergau (DE); Kilpert, Jörg, 82178 Puchheim (DE)
(74) Representative: Isarpatent

(57) **Abstract**

The present invention relates to a controller working position which comprises a flexible and at the same time highly automated setting of the screen illuminations at a controller working position. In a first screen illumination mode the setting of the screen illumination is automatically executed, preferably considering the existing light and illumination situation. In second screen illumination mode a user directly sets, change or modifies the screen illumination according his very personal preference. The present invention further relates to an air traffic control system having such controller working positions.

## Description

### TECHNICAL FIELD

The present invention relates to a controller working position. The present invention further relates to an air traffic control system having such controller working positions.

### BACKGROUND OF THE INVENTION

Air traffic control (ATC) is a service provided by a ground-based air traffic control system that directs civilian or military aircraft on the ground and through a given section of controlled airspace and who can provide advisory services to aircraft in non-controlled airspace. For this purpose, an ATC system is equipped with a complex information processing system that processes and controls various air traffic control data in order to provide the smooth operation of civilian or military aircrafts. The handling of this ATC system is performed by air traffic control specialists (ATCS). The ATC system provides the ATCS amongst others with identification and display of aircraft, presentation and distribution of flight plan data, flight safety warnings, and handling controller requirements.

ATCSs monitor the location of aircrafts in their assigned airspace typically by radar and communicate with the aircraft's pilots by radio. The ATCS' operator position that is located typically in an airport tower is denoted as controller working position or shortly CWP. The CWP that provides a human-machine interface to ATCSs at the air traffic service units (ATSU) typically comprises a specific workstation along with one or more screens. Such an air traffic controller working position is disclosed for example in KR 101 407 862 B1. An ATC system is for example the CERTIUM system which is developed and distributed in various configurations by Rohde & Schwarz, Munich.

The ATCSs at their controller working position in the tower have a 24 hours day, 7 days a week in order to provide air traffic service around the clock. However, the light situation varies depending on the time of day, incident sunlight and artificial backlighting. For example, during day, when the sun is shining, the ATCSs need high brightness and during night, when the light is low, they need a low brightness at the screen of their CWP. In addition, different persons also have different personal preferences when it comes to their preferred lighting situation.

In order to change the illumination setting of the CWP screen, the ATCSs have to adjust the illumination of the screen manually using a specific input device.

### SUMMARY OF THE INVENTION

Against this background, the object underlying the present invention is to provide an improved and in particular for the user easier configuration of the CWP screen illumination.

The present invention provides a controller working position and an air traffic control system having the features of the independent claims.

Accordingly, it is provided:
- A controller working position -CWP- for an air traffic control -ATC- system, the CWP comprising: at least one screen having a tunable illumination; a photo-sensing unit which is configured to sense the illumination and/or light in the surroundings of the CWP; a first input unit which is configured to receive a manual user input for changing the illumination of at least one of the screens; and an illumination controller which is configured to control the illumination of at least one of the screens and which is further configured to operate the corresponding screen either in a first screen illumination mode or a second screen illumination mode, wherein in the first screen illumination mode the screen illumination is automatically adjusted depending on the sensed illumination and/or light in the surroundings of the CWP and wherein in the second screen illumination mode the screen illumination is adjusted manually depending on a user specific configuration via the first input unit.
- An air traffic control -ATC- system, the ATC system comprising: a plurality of tower controller working positions -CWP- according to the present invention, which are installed in the same tower building.

The present invention is based on the idea to assist the ATCSs as much as possible and to avoid any annoying distraction so that the ATCSs can concentrate as much as possible for their daily work. The solution according to the present invention comprises a very flexible and at the same time highly automated setting of the CWP screen illuminations. This solution covers two options:
Firstly, in a so-called first screen illumination mode the setting of the screen illumination is automatically executed, preferably considering the existing light and illumination situation. This is being triggered by a suitable photo-sensing unit within the CWP.

According to an additional option, in a so-called second screen illumination mode a user may directly set, change or modify the screen illumination according his very personal preferences using a dedicated input means within the CWP. This personal setting may also be stored so that one and the same ATCS can easily retrieve one or more of his personal preferred configurations any time he needs it.

Preferably, the illumination controller is also configured to adapt the screen illumination mode for different types of screens, e.g. depending on their size, capacitive or resistive properties, LED-type, etc.

Advantageous configurations and developments emerge from the further dependent claims and from the description with reference to the figures of the drawings.

In a preferable configuration, the illumination controller is configured to select the first screen illumination mode as a default screen illumination setting whenever no user input for the screen illumination is given. In case, a user is modifying the screen illumination, then the illumination controller is switching from the first screen illumination mode to the second screen illumination mode.

According to one embodiment, the CWP comprises at least two separate screens. In this preferred configuration, the illumination controller is configured to control the illumination of each screen as well in the first and second screen illumination mode separately, thus enabling a highly flexible illumination of separate screens depending on their installation location, orientation, type, tilting angle, size and the like. This enables an optimal and particularly screen specific adjustment of the illumination of this screen.

In an additional or alternative embodiment, at least one of the screens is configured to display a plurality of windows at the same time at the same screen surface. This way, it is possible to partition a screen with a plurality of adjacently arranged windows that substitute separate screens. Besides, it is also possible to provide a so-called picture-in-picture representation of a window that is added into an existing window and thus extending the overlaid part of this window. The illumination controller is configured to control the illumination of each of these windows within the same screen separately, which applies as well for the first and second screen illumination mode. The advantages are similar to the ones sketched in the above paragraph for the separate controlling and illumination adjustment of different screens within the same CWP.

In a preferable configuration, the illumination controller is configured to provide a day/night mode of operation for at least one of the screens where the illumination of one or more screens is switched automatically depending on the time of day. For example, the day/night mode may comprise increasing or reducing the screen illumination depending on the time of day. Additionally or alternatively, the day/night mode may also comprise inverting the colors of displayed elements on the screen and/or using different color schemes for the displayed elements and the screen masks. In particular, color inversion reduces for example the glare of bright charts, displayed elements and text when viewing them at night by inverting white and black elements. In this way, text and chart symbols are prominent and legible without the distracting glare while viewing them in a dark cabin or room. As a consequence, a day/night mode of operation for at least one of the screens minimizes eyestrain and fatigue.

Additionally, the illumination controller may also be configured to switch on an illumination of a keyboard of the CWP for the night mode and to switch off the keyboard illumination for the day mode.

In a preferable configuration, a log memory is provided. In this configuration, the illumination controller may be configured to automatically generate a log information in case of any modification in the configuration of the screen illumination mode. This automatically generated log information is then stored in the log memory. The log memory may be specifically assigned to a specific CWP and/or is provided by a central memory apparatus that serves for different CWPs within the same ATC system.

In a preferable configuration, a configuration memory is provided. The configuration memory is further configured to store at least one day/night mode and/or at least one user specific configuration for the used screen illumination mode. This way, it is possible to store and individualize a user specific first and second screen illumination mode. In a particular preferred configuration, the configuration memory is formed by a central memory for the complete ATC system and/or is accessible from different CWPs within the same ATC system. This way, a user may use the same illumination configuration when working at different CWPs.

In a preferred, but not necessary embodiment, the configuration memory and the log memory are part of the same memory device.

In particular, the illumination controller is configured to initially preset the screen illumination mode based on the stored information for the day/night mode. Additionally or alternatively, in particular in case of a stored user presetting information, the illumination controller may also be configured to initially preset the screen illumination mode based on the stored user specific configuration. This presetting is executed preferably whenever a new user logs-in and starts working on a specific CWP.

According to another embodiment, an IP interface for controlling the at least one screen is provided. In a preferred configuration, the one or more screens of a CWP may be controlled externally via this IP interface. For the communication via the IP interface, a Transmission Control Protocol (TCP) and/or an IP protocol may be employed

According to a further embodiment, a second input unit is provided. The second input unit comprises when activated a switch-back functionality from the first screen illumination mode to the second screen illumination mode and vice versa, depending on which screen illumination mode is currently executed. This way, a user may decide which screen illumination mode should be used, i.e. the automatic first screen illumination mode or the user specific second screen illumination mode.

In a particular preferred embodiment, at least one of the screens is a touch screen or a touch resistive display. This touch screen comprises a human-machine interface (HMI) graphical surface, wherein the first input unit and/or the second input unit are functional input means on the HMI graphical surface. In this way, a user can make user inputs directly on the screen in a very simple and convenient way, which also provides an immediate input response so he can immediately make a corresponding user input correction, if the input does not yet correspond to his wishes.

In a preferable configuration, the first and/or second input unit comprises at least one of:
- a button, such as a push button;
- a switch, such as a slide switch, a rotary switch or an on/off switch;
- a slide bar.
Preferably, the button, switch and/or slide bar are a functional elements which are provided directly at the touch screen.

In an alternative or additional configuration, the first input unit and/or the second input unit comprise a voice controlled input interface so that the user inputs may also be triggered via voice commands. In this way, the user is not distracted by manually performed user inputs and can fully concentrate on his ATC work.

According to another embodiment, at least one of the photo-sensing units is arranged within the screen, in particular directly on the screen surface of the touch screen. According to another embodiment, the photo-sensing unit comprises at least one optical sensor. The optical sensor is configured to identify and measure at least one of:
- artificial ambient light;
- natural ambient light;
- incoming direct sunlight impinging on at least one of the screens.

In a first preferred configuration of the ATC system, the one or more photo-sensing units are located at a central location of the tower building so that they can be used for a plurality of CWPs within the same tower building room. This way, less sensors are needed for the ATC system.

In a second preferred configuration of the ATC system, at least one photo-sensing unit is assigned for each of the CWPs. In this configuration, the photo-sensing units are positioned in the proximity of the CWP to which they are assigned. This way, more sensors are needed for the ATC system, however, thus enabling more flexibility and enabling higher precision in the configuration of the individual CWPs.

Where appropriate, the above-mentioned configurations and developments can be combined in any manner. Further possible configurations, developments and implementations of the invention also include combinations, which are not explicitly mentioned, of features of the invention that have been described previously or are described in the following with reference to the embodiments. In particular, in this case, a person skilled in the art will also add individual aspects as improvements or supplements to the basic form of the present invention.

### CONTENT OF THE DRAWINGS

The present invention is described in greater detail in the following on the basis of the embodiments shown in the schematic figures of the drawings, in which:
- FIG. 1: shows a block diagram of a controller working position for an air traffic control system according to a first aspect of the present invention;
- Fig. 2: shows a block diagram of a controller working position according to a further aspect of the present invention;
- Fig. 3: shows a block diagram of an air traffic control system according to still further aspect of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DESCRIPTION OF EMBODIMENTS

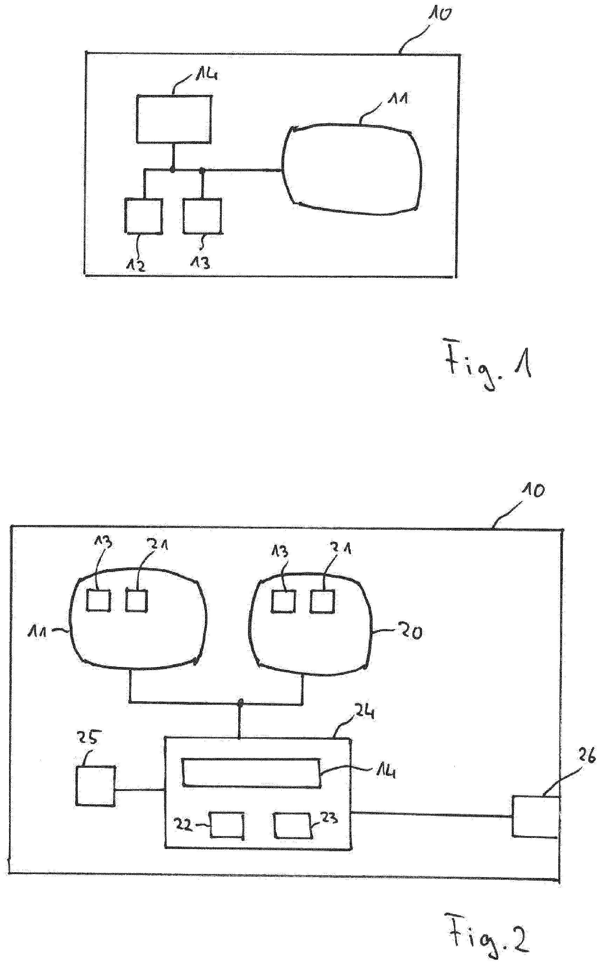

Fig. 1 shows a block diagram of a controller working position for an air traffic control system according to a first aspect of the present invention. The controller working position (CWP) is denoted by reference numeral 10. The CWP 10 comprises a screen 11, a photo-sensing unit 12, a first input unit 13 and an illumination controller 14.

The screen 11 comprises a tunable illumination. The photo-sensing unit 12 is configured to sense the illumination and/or light in the surroundings of the CWP 10 and in particular in the surrounding of the screen 11. The first input unit 13 is configured to initiate a change of the illumination of the screen 11 in response to a manual input. The illumination controller 14 is configured to control the illumination of the screen 11.

The illumination controller 14 is further configured to operate the screen 11 in at least two different modes: In a first mode, the screen illumination is adjusted manually by a user via the first input unit 13. According to the present invention, in another mode the illumination controller 14 controls the illumination of the screen automatically. The automatic adjustment of the illumination is being executed based on illumination and/or light information that the illumination controller 14 derived from the photo-sensing unit 12. The photo-sensing unit 12 has sensed or measured these illumination and/or light information in the surroundings of the CWP 10.

Fig. 2 shows a block diagram of a controller working position according to a second aspect of the present invention.

In difference to the example in Fig. 1, the controller working position 10 comprises two separate screens 11, 20. Further the controller working position 10 in Fig. 2 comprises a second input unit 21, a log memory 22, a configuration memory 23, a programmable control unit 24, a voice controlled input interface 25 and an IP interface 26.

The IP interface 25 may be used to control the screens 11, 20 from an external location. It is also possible that the functionally of the illumination controller 14 is at least partially executed or supported via the IP interface 25.

The second input unit 21 offers a switch-back functionality from the first screen illumination mode to the second screen illumination mode and vice versa.

According to an example (not shown in Fig. 2), both screens 11, 20 comprise separate first and second input units 3, 21 in order to adjust their illumination separately. This is in particular preferable, in case the orientation of the screens 11, 20 with regard to incoming sunlight and/or artificial background light is different to each other.

Preferably, the screens 11, 20 are touch screens that comprise a HMI graphical surface that includes the first and second input units 3, 21. The first and second input units 3, 21 are in this example functional, touch sensitive buttons, however, also touch sensitive switches or slide bars may be possible. It is also conceivable that the function of the input units 3, 21 is formed by the voice controlled input interface 24 (not shown in Fig. 2) .

The CWP 10 further comprises a log memory 22 and a configuration memory 23. Both memories 22, 23 are preferably part of the programmable control unit 24 which also comprises the illumination controller 14.

The log memory 22 serves for logging any information and data with regard to an adjustment of the illumination mode, regardless whether this adjustment was performed automatically or in response of an user action.

In the configuration memory 23, predefined illumination configurations may be stored. These predefined illumination configurations may be for example specific configurations for a day/night mode. Additionally, the predefined illumination configurations may also comprise different user specific configurations for the screen illumination mode.

According to the present invention, the illumination controller 14 may control additionally or alternatively the illumination of the screens 11, 20 in various ways:
For example, the illumination controller 14 can select one screen illumination mode as a default screen illumination setting, for example, the one that automatically adjusts the screen illumination based on sensed illumination information.

The illumination controller 14 may initially preset one or more screens 11, 20 automatically based on the daytime in combination with the stored information of the day/night mode.

The illumination controller 14 may also provide a day/night mode of operation for at least one of the screens 11, 20.

In another example, the illumination controller 14 may control the illumination of each screen 11, 20 separately.

The illumination controller 14 automatically generates a log file in case of any modification in the configuration of the illumination mode of one of screens 11, 20. This log file is then stored in the log memory 22.

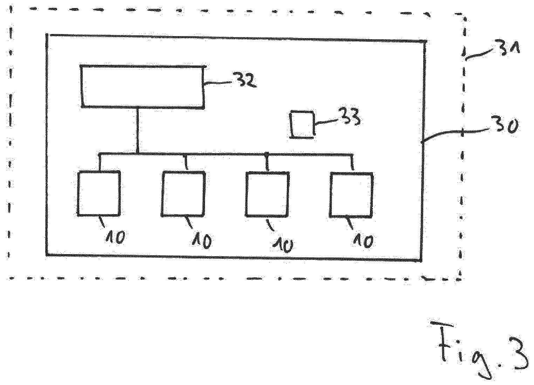

Fig. 3 shows a block diagram of an air traffic control system (ATC) according to an aspect of the present invention.

The ATC-system 30 is at least partially located in a tower building 31 of an airport. The ATC-system 30 comprises in this example a plurality of different of controller working positions 10, which are preferably such as described above with regard to the examples in Fig. 1 and 2.

The ATC-system 30 comprises a central server 32 which comprises a processing unit and which is configured to provide centralized control of the operation for all CWPs 10. Preferably, the central server 32 is coupled with the programmable control units 24 and/or illumination control units 14 of the CWPs 10. In an additional or alternative embodiment (not shown in Fig. 3), the central server 32 may also perform the functionality of the programmable control units 24 and/or illumination control units 14 of the CWPs 10.

In the embodiment shown in Fig. 3, at least one further photo-sensing unit 33 is arranged in a central position within the building 31 which is shown in Fig. 3 in dotted lines. This further photo-sensing unit 33 is coupled to the CWPs 10 and is configured to provide illumination information for the illumination control units 14 of the corresponding CWPs 10.

The invention is not limited to physical devices or units implemented in non-programmable hardware, but can also be applied in programmable devices or units able to perform the desired device functions by operating in accordance with suitable program code. Furthermore, the devices may be distributed physically over a number of apparatuses and instruments, while functionally operating as a single device. Devices functionally forming separate devices may be integrated in a single physical device. Those skilled in the art will recognize that the boundaries between logic or functional blocks are merely illustrative and that alternative embodiments may merge logic or functional blocks or impose an alternate decomposition of functionality upon various logic or functional blocks.

In the description, any reference signs shall not be construed as limiting the claim. The word "comprising" does not exclude the presence of other elements or steps then those listed in a claim. Furthermore, the terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same applies for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

### List of used reference symbols

- 10: controller working position, CWP
- 11: screen
- 12: photo-sensing unit
- 13: first input unit
- 14: illumination controller

- 20: (further) screen
- 21: second input unit
- 22: log memory
- 23: configuration memory
- 24: programmable control unit
- 25: voice controlled input interface
- 26: IP interface

- 30: ATC-system
- 31: tower building
- 32: central server
- 33: further photo-sensing unit

## Claims

1. A controller working position -CWP- (10) for an air traffic control -ATC- system (30), the CWP comprising:
at least one screen (11, 20) having a tunable illumination;
a photo-sensing unit (12) which is configured to sense the illumination and/or light in the surroundings of the CWP (10);
a first input unit (13) which is configured receive a manual user input for changing the illumination of at least one of the screens (11, 20); and
an illumination controller (14) which is configured to control the illumination of at least one of the screens (11, 20) and which is further configured to operate the corresponding screen (11, 20) either in a first screen illumination mode or a second screen illumination mode,
- wherein in the first screen illumination mode the screen illumination is automatically adjusted depending on the sensed illumination and/or light in the surroundings of the CWP (10) and
- wherein in the second screen illumination mode the screen illumination is adjusted manually depending on a user specific configuration via the first input unit (13).

2. The controller working position according to claim 1, wherein the illumination controller (14) is configured to select the first screen illumination mode as a default screen illumination setting.

3. The controller working position according to any of the preceding claims,
wherein the CWP (10) comprises at least two separate screens (11, 20) and wherein the illumination controller (14) is configured to control the illumination of each screen (11, 20) separately, and/or
wherein at least one of the screens (11, 20) is configured to display a plurality of windows at the same time at the same screen surface, wherein the illumination controller (14) is configured to control the illumination of each window within the screen separately.

4. The controller working position according to any of the preceding claims,
wherein the illumination controller (14) is configured to provide a day/night mode of operation for at least one of the screens (11, 20).

5. The controller working position according to any of the preceding claims,
further comprising a log memory (22), wherein the illumination controller (14) is configured to automatically generate a log information in case of any modification in the configuration of the screen illumination mode and to store this log information in the log memory (22).

6. The controller working position according to any of the preceding claims,
further comprising a configuration memory (23) coupled to the CWP, wherein the configuration memory (23) is configured to store at least one day/night mode and/or at least one user specific configurations for the screen illumination mode.

7. The controller working position according to claim 6, wherein the illumination controller (14) is configured to preset initially the screen illumination mode based on the stored information for the day/night mode and/or the user specific configuration.

8. The controller working position according to any of the preceding claims,
further comprising an IP interface (26) for controlling the at least one screen (11, 20).

9. The controller working position according to any of the preceding claims,
further comprising a second input unit (21) that comprises when activated a switch-back functionality from the first screen illumination mode to the second screen illumination mode and vice versa, depending on which screen illumination mode is currently executed.

10. The controller working position according to any of the preceding claims,
wherein the screen (11, 20) is a touch screen that comprises a HMI graphical surface, wherein the first input unit (13) and/or second input unit (21) are functional input means on the HMI graphical surface.

11. The controller working position according to any of the preceding claims,
wherein the first input unit (13) and/or the second input unit (21) comprises at least one of:
- a button;
- a switch;
- a slide bar.

12. The controller working position according to any of the preceding claims,
wherein the first input unit (13) and/or the second input unit (21) comprise a voice controlled input interface (25).

13. The controller working position according to any of the preceding claims,
wherein at least one of the photo-sensing units (12) is arranged within the screen (11, 20), and/or
wherein the photo-sensing unit (12) comprises at least one optical sensor that is configured to identify and measure at least one of:
- artificial ambient light;
- natural ambient light;
- incoming direct sunlight.

14. An air traffic control -ATC- system (30), the ATC system (30) comprising:
a plurality of controller working positions -CWP- (10) according to any of the claims 1 to 13, which are installed in the same tower building.

15. The air traffic control system according to claim 14,
- wherein at least one photo-sensing unit (33) is arranged in a central position within the tower building (31), and/or
- wherein at least one photo-sensing unit (12) is positioned in the proximity of a CWP (10) to which it is assigned.
